(19) Europäisches Patentamt
European Patent Office
Office européen des brevets

(11) EP 1 244 753 B1

(12) EUROPEAN PATENT SPECIFICATION

(45) Date of publication and mention of the grant of the patent: **11.02.2004 Bulletin 2004/07**

(21) Application number: **00977723.6**

(22) Date of filing: **27.11.2000**

(51) Int Cl.⁷: **C09D 133/06**, C09D 5/38, C04B 41/51

(86) International application number: **PCT/GB2000/004481**

(87) International publication number: **WO 2001/040392 (07.06.2001 Gazette 2001/23)**

# (54) LIQUID GOLD COMPOSITIONS

FLÜSSIGE GOLDZUSAMMENSETZUNG

COMPOSITIONS D'OR LIQUIDE

(84) Designated Contracting States:
**AT BE CH CY DE DK ES FI FR GB GR IE IT LI LU MC NL PT SE TR**

(30) Priority: **29.11.1999 GB 9928069**

(43) Date of publication of application: **02.10.2002 Bulletin 2002/40**

(73) Proprietor: **JOHNSON MATTHEY PUBLIC LIMITED COMPANY
London SW1Y 5BQ (GB)**

(72) Inventor: **MARSH, Patricia, Ann
Oxon OX5 1TJ (GB)**

(74) Representative: **Wishart, Ian Carmichael et al
Patents Department
Johnson Matthey Technology Centre
Blount's Court
Sonning Common
Reading, RG4 9NH (GB)**

(56) References cited:
**DE-A- 3 027 472**
**US-A- 3 450 545**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

EP 1 244 753 B1

## Description

The present invention relates to new and improved liquid gold compositions, a method of preparation therefor and use thereof for decorating substrates.

Liquid gold compositions have been known in the art and used for gilding and decorating substrates for a long time. Traditional liquid gold compositions contain gold sulpho-resinates in combination with natural resinous materials (by Boudnikoff, Compt. Rend., 196, 1898 (1933) and by Chemnitius, J. Prakt. Chem., 117, 245 (1927)). The gold sulpho-resinates are prepared by the reaction of a gold chloride solution with a sulphurised terpene. These are then diluted with natural oils such as lavender, rosemary and pine oils. Rosin and asphalt resins are added to thicken the compositions so that they are suitable for decorating, gilding or printing applications. Furthermore, small amounts of salts or resinates of metals such as rhodium, bismuth, chromium etc are also added as fluxes to these compositions to improve the lustre of the gold in the fired product and also to improve the adhesion of the gold applied to the substrate upon firing. In preparing other compositions, various gold mercaptides have been used. For instance, US-A-2490399 describes the use of gold mercaptides of cyclic terpenes but does not provide any structure for the resultant mercaptide. Again, the mercaptide of gold prepared from thio-borneol has been described in the Journal of the Society of the Chemical Industry, Japan, 38, Supplement 617B (1935) by Nakatsuchi although this reference makes no mention of the possibility of using such compounds in decorating or gilding compositions. According to US-A-3163665, the gold thiolates derived from cyclic terpenes have the disadvantage of requiring relatively high firing temperatures, thereby limiting their use on substrates such as glass, ceramics etc. and consequently recommends the use of non-terpenoid gold secondary mercaptides. Similarly, US-A-3245809 claims and describes the use of a liquid gold decorating composition comprising a nuclear-substituted gold aryl mercaptide wherein the sulphur is attached directly to the aryl nucleus which is already substituted by an alkyl group in solution in an organic vehicle and a gold flux. The specific aryl mercaptides disclosed include gold p-tert.-butylphenyl mercaptide prepared from p-tert.-butylbenzenethiol and aurous chloride. The fluxes used are said to contain small amounts of salts or resinates of rhodium or iridium to improve the continuity and brilliance of the gold film and the only other component, apart from the vehicle (solvent), is rosin dissolved in oil of turpentine. No synthetic polymeric thickeners are mentioned in these compositions.

More recently, US-A-5328769 states that the conventional isooctyl- and tert.-dodecyl-gold thioglycolates are not satisfactory for use in gilding preparations for decorating ceramics because the drying time for such preparations is very long. This document also states that gold (I) bornyl mercaptide (described in US-A-4221826) proved advantageous in the production of integrated electronic circuits but that such compounds "have the disadvantage of a partially very unpleasant odour which becomes particularly noticeable in a disturbing manner when the gold preparations are applied by heat". Thus, instead, this reference claims and describes a method of gilding solid bases, by applying a gold preparation comprising a gold mercaptocarboxylic acid ester on to a solid base followed by firing. The "gold preparation" also contains fluxing agents including in particular, sulphoresinates, resinates, naphthenates, carboxylates, and dithiocarbamates of the elements B, Si, V, Cr, In, Sn, Pb, Bi and Rh. These compositions are also stated to contain one or several resins from the series of wood resins and synthetic resins (e.g., hydrocarbon resins, polyacrylates and polymethacrylates). However, no preparations containing these synthetic resins are described and no particular benefit or advantage is said to accrue by the use of such synthetic resins.

Thus, the liquid gold compositions typically involve the use of either (i) a gold mercaptide compound, or, (ii) a gold sulpho-resinate, in combination with natural resins (e.g. rosin or colophony, often in their sulphided form, or, asphalt) and some synthetic resins such as e.g. phenol-aldehyde resins. The gold sulpho-resinates of the present invention in turn can be obtained from a gold (III) compound or gold (I) salts or compounds and a sulphurised terpene, the terpene component of which may be naturally occuring. These compositions may have overcome some of the traditional problems such as e.g. adhesion, drying, odour etc. However, they still have one or more of the following disadvantages:

Unsatisfactory application of ink onto substrate; undesirable changes in viscosity during application; formation of defective films on application to the substrate prior to firing; dewetting of ink on substrate (often caused by sensitivity of ink to dust particles) leading to pinholing; formation of defective films having 'black spots' on firing which cannot be envisioned prior to firing; poor adhesion of the gold film on to the substrate; and observation of poor colour, usually red, on the reverse of transparent substrates such as e.g. glass.

It has now been found that the performance of the liquid gold compositions in all the above aspects can be substantially improved by choice of a specific synthetic polymer for thickening such compositions.

Accordingly, the present invention is a liquid gold composition comprising a gold lustre and an effective amount of an acrylate polymer of the formula:

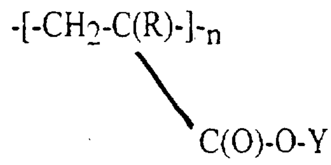

(I)

where
R = H or a $C_1$-$C_4$ alkyl group,
Y = a $C_5$ - $C_{40}$ hydrocarbyl group, which is monocyclic, bicyclic or tricyclic, which may be further carry ring substituents. and
n = an integer representing the number of repeat units in the polymer.

By the expression "gold lustre" as used herein and throughout the specification is meant a derivative of gold which may be a sulpho-resinate, hydrocarbyl (such as e.g. alkyl or aryl) mercaptide, or a mercaptocarboxylic acid or an ester thereof. The term gold sulpho-resinate in the context of the present invention means a gold compound formed from a gold (III) compound or a gold (I) compound and sulphurised resin group. As mentioned previously, the gold sulpho-resinates can be obtained from a gold (III) salt and a sulphurised terpene, the terpene component of which may be naturally occuring. Specific examples of such mercaptide compounds include:

a. hydrocarbyl gold mercaptides of the formulae

$$Au\text{-}S\text{-}CH_2R^1,$$

wherein $R^1$ = alkyl
$Au\text{-}S\text{-}CH(R^2)R^3$, wherein each of $R^2$ and $R^3$ = the same or different alkyl or aryl group (secondary thiols)
$Au\text{-}S\text{-}CR^4R^5R^6$, wherein each of $R^4$, $R^5$ and $R^6$ = the same or different alkyl or aryl group (tertiary thiols)
$Au\text{-}S\text{-}R^7$ wherein $R^7$ = aryl group or a substituted aryl group (aromatic thiols).
Au-SCHR-C02R' where R = H, alkyl, aryl and R' =H, alkyl, aryl

More specifically, references to the hydrocarbyl groups, such as e.g. alkyl or aryl groups, in the formulae above includes within its scope the respective groups selected from alkyl, cycloalkyl, aryl and aralkyl groups, and any substituted derivatives thereof. For example the substitued derivitives may be halo, amino, carboxylic acid or ester groups. Specifically, the hydrocarbyl groups in the mercaptide may be any one of methyl, ethyl, isopropyl, butyl, sec.-butyl, isobutyl, tert-butyl, heptyl. octyl, isooctyl, 2-ethyl hexyl, di-isobutylmethyl, nonyl, tert-nonyl, decyl, tert-decyl, undecyl, tert-undecyl, dodecyl, tert-dodecyl, tridecyl and octadecyl, cyclobutyl, cyclopentyl, cyclohexyl, dicyclohexylmethyl, phenyl, naphthyl, phenanthryl, benzyl, methylphenyl, 2-phenyl ethyl, 4-phenyl butyl, p-tert.-butylphenyl, o-methyl-p-tert.-butylphenyl, pinanyl, mixed methylphenyl, mixed dimethylphenyl, mixed dibenzylmethyl, p-chlorophenyl, pentachlorophenyl, o-carboxy-phenyl and o-aminophenyl groups. These mercaptides can be prepared by admixing the appropriate hydrocarbyl mercaptan with a gold salt suitably a halogenated auric salt such as auric bromide. auric chloride. auric iodide, potassium bromoaurate or potassium iodoaurate as described in US-A-3245809.

The acrylate polymers present in the compositions of the present invention are of the formula:

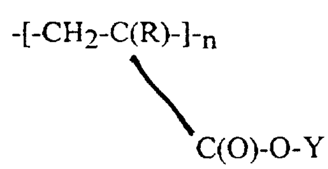

(I)

where
R = H or a $C_1$-$C_4$ alkyl group,
Y = a $C_5$ - $C_{40}$ hydrocarbyl group, which is monocyclic, bicyclic or tricyclic and which may be further carry ring substituents, and
n = an integer representing the number of repeat units in the polymer.

Cyclic hydrocarbyl groups representing Y are suitably terpenyl groups derivable from a terpene and the term

"terpene" as used herein and throughout the specification is meant to describe a cyclic compound which is a natural, non-aromatic constituent of an essential oil, containing carbon, hydrogen and optionally oxygen, and/or synthetic compounds which are very closely related to these natural terpenes. These terpenes can be selected from the following classes based on the number of isoprene units within the structure: monoterpenes (10 carbons - two isoprene units), sesquiterpenes (15 carbons), diterpenes (20 carbons), triterpenes (30 carbons) and tetraterpenes (40 carbons). Of these. the group Y is preferably a terpenyl group derived from a bicyclic monoterpene (10 carbons). More specifically, examples of bicyclic monoterpenyl groups include bornyl, isobornyl, thujyl, fenchyl, pinocamphyl and isopinocamphyl groups.

Such polymers can be prepared by solution or suspension polymerisation reaction of the desired monomer and a suitable initiator under dry anaerobic reaction conditions. The polymers of formula (I) suitably have an average molecular weight in the range from 2.000 to 600,000, preferably from 30,000 to 600,000, more preferably from 50,000 to 200,000.

An example of a polymer of formula (I) is poly(isobornyl methacrylate) which in turn can be made from the corresponding isobornyl methacrylate monomer and having an average molecular weight in the range from 500,000-600,000. Such polymers are commercially available (ex Aldrich Chemicals).

The amount of the polymer (I) in the compositions of the present invention is suitably in the range from 0.05 to 50% by weight, preferably from 0.5 to 30% by weight, typically 1 to 10% by weight of the total composition. The amount of the polymer (I) used may vary within these ranges depending upon the molecular weight thereof and the method used for the application of the liquid gold composition on the substrate.

The compositions of the present invention suitably contain in addition a solvent to provide a vehicle for applying the gold composition onto a substrate. The solvent should be such that it is capable of forming a substantially homogeneous mixture with the gold lustre and the polymer so as to form a liquid or a smooth paste. Thus, the solvent chosen should be such that it is commensurate with the desired physical properties in the composition such as e.g. oilness, viscosity, evaporation rate, surface tension and tack, depending upon the manner in which the composition is to be applied to the substrate surface. Suitable examples of such solvents include ketones, aliphatic hydrocarbons, aromatic hydrocarbons. alkyl acetates, glycol ethers, terpenes, natural oils and waxes. More specifically, these may be one or more of the following: methyl ethyl ketone, cyclohexanone, ethyl acetate, ethyl lactate, butyl lactate, amyl acetate, cellosolve, butanol, cyclohexanol, propylene glycol butyl ether, propylene glycol phenyl ether, dipropylene glycol dimethyl ether, propylene glycol methyl ether acetate, toluene, xylene. petroleum ether, terpenes such as pinene, dipentene, dipentene oxide, natural oils such as lavender, rosemary, aniseed, sassafras, wintergreen, fennel, and turpentine. Various other subsidiary resins such as rosin, asphalt, colophony, poly(terpene), phenolformaldehyde resins and the like may also be present in the compositions of the present invention.

The compositions of the present invention may contain in addition gold fluxes which are small amounts of metal salts or resinates and these determine the behaviour of the gold film during application on the substrate and subsequent firing thereof at elevated temperature. The specific choice of flux will be determined not only by the aforementioned conditions but also by the substrate upon which the composition is to be applied, the method of application as well as the need to provide lustre to the metal film applied on the substrate. Examples of fluxes that may be used include salts or resinates of antimony, bismuth, boron, cadmium, cerium, chromium, cobalt, copper, iridium, lead, rhodium, silicon, silver, tin, titanium, vanadium and zirconium. The fluxes also improve the adhesion of the gold metal film on the substrate and provide resistance to abrasion. The fluxes achieve these functions by initially melting and then forming a thin, protective, transparent film on the metal film during the firing process. Of these, fluxes containing salts or resinates of rhodium and/or iridium are most preferred.

The amount of flux added to the compositions of the present invention is suitably in the range from about 0.01 to 10 % by weight, preferably from about 0.05 to 5.0 % by weight of the total composition.

The substrate surface on which the compositions of the present invention are applied may be suitably of relatively refractory materials and are preferably selected from the group consisting of glass, earthenware, bone china, porcelain, silicate materials, metals, quartz, carbon, mica and the like.

The compositions of the present invention may be applied on the substrates by any of the known application methods. For instance, they may be applied by simple brush coating, spraying, stippling, stenciling, decalomania, direct and offset printing, indirect screen-printing, direct hot- or cold-printing or ink-jet printing techniques.

Thus, according to a further embodiment the present invention is a method of decorating substrate surfaces, said method comprising applying a composition comprising a gold lustre and the polymer (I) in a solvent, and heat-treating the resultant substrate to cure the decoration on the substrate surface.

As indicated above, once the composition of the present invention in a solvent is applied as a decoration on a substrate surface, the decoration is suitably cured by heat-treating the decorated substrate at elevated temperature. The heat-treatment temperatures used will depend upon the nature of the gold lustre used, the solvent used and the amount of the polymer (I) used, although more importantly, it will depend upon the substrate surface upon which the decoration is applied. Thus, for refractory substrates, heat-treatment/firing temperatures may vary over a wide range

from about 300-1300C, preferably from about 500-900C, typically from about 550-900C. Temperatures towards the upper end of the ranges specified above e.g. around 900C may be required for substrates such as porcelain.

A feature of the compositions of the present invention is that the use of the specific polymers (I) showed excellent compatibility with the gold lustres used. Moreover, on firing, the major problem of 'black spot' formation with conventional compositions was no longer observed. Also, on glass, reverse colour is improved over that of currently available compositions for this purpose. Analogous formulations prepared using commercially available polymers corresponding to polymer (I) but in, which the terpenyl group Y is replaced by a relatively simple alkyl group, such as eg methyl, ethyl or butyl groups, did not show similar improvement in the decorative films formed.

The compositions and process of the present invention are further illustrated with reference to the following Examples:

## EXAMPLES:

### Bright gold preparations

All composition data is in % by weight and all firing temperatures are in C. The gold sulpho-resinates used are available from Johnson Matthey PLC and the silver sulpho-resinates were prepared from silver and sulphurised balsam. A solution of poly(isobomyl methacrylate) was prepared in the stated solvent at various concentrations as specified in each Example below. All formulations were prepared to give 'a concentration of 10% wt Au. This was then used to prepare the following liquid gold formulations. All formulations were prepared to give a concentration of 10wt%Au.

### EXAMPLE 1

| | |
|---|---|
| 18.3 | Au($SC_6H_4$-p-$CMe_3$) (prepared according to the method described in US-A-3,245,809) |
| 40 | Poly(isobornyl methacrylate) (ex Aldrich. MW 550.000) as a 30% by weight solution in cyclohexanone |
| 4 | Rh-ethyl-hexanoate dissolved in cyclohexanone (0.12% Rh) |
| 37.7 | Xylene |
| 100 | |

### Comparative Test

(not according to the invention):

| | |
|---|---|
| 18.3 | Au($SC_6H_4$-p-$CMe_3$) (prepared according to the method described in Example 1(F) of US-A-3,245,809) |
| 40 | Poly(butyl methacrylate) (NeocrylB804, ex Zeneca Resins) as a 30% by weight solution in cyclohexanone |
| 4 | Rh-ethyl-hexanoate dissolved in cyclohexanone (0.12% Rh) |
| 37.7 | Xylene |
| 100 | |

Each of the above two formulations were gilded onto ceramic ware, and fired at 865C over a 1 hour cycle. The formulation of Example 1 gave bright golden films free of film defects whereas the formulation of the Comparative Test gave poor quality films.

### EXAMPLE 2

| | |
|---|---|
| 30.86 | Gold sulpho-resinate |
| 40 | Poly(isobornyl methacrylate) (ex Aldrich Chemicals) as a 20% by weight solution in cyclohexanone |
| 4 | Rh-ethyl-hexanoate dissolved in cyclohexanone to a final concentration of 3% Rh |

(continued)

| | |
|---|---|
| 0.54 | Cr Nuosyn5 to a final concentration of 7.45% Cr2O3 |
| 3.67 | Bismuth octoate lustre to a concentration of 10% Bi2O3 |
| 20.93 | Rosemary oil |
| 100 | |

The formulation was applied to china and porcelain by brush over a large area. Upon firing, it gave a bright gold film of similar colour to commercial golds with no film defects (ie black spots) observed in the film.

**EXAMPLE 3**

The process of Example 2 was repeated except that sulphided colophony resin was used instead of the poly (isobomyl methacrylate). Bright films, with film defects were obtained upon application and subsequent firing.

**EXAMPLE 4**

| | |
|---|---|
| 18.3 | $Au(SC_6H_4\text{-p-}CMe_3)$ |
| 29.9 | -pinene |
| 21.2 | Silver sulpho-resinate solution (2% wt Ag) in form |
| 2.4 | Anethol |
| 1.2 | Rosemary oil |
| 10 | Dipentene |
| 10 | Poly(isobornyl methacrylate) as a 20% wt cyclohexanone solution |
| 6 | Poly(isobomyl methacrylate) as a 20% wt solution in lavender oil |
| 1 | Rh-ethyl-hexanoate dissolved in cyclohexanone (0.12% Rh) |

The formulation was applied onto a Koelner Stange glass at 580C and upon firing bright films free of film defects were obtained.

**EXAMPLE 5**

| | |
|---|---|
| 18.3 | $AuSC_6H_4\text{-p-}CMe_3$ |
| 40 | 30% wt Poly(isobornyl methacrylate) (100,000 mwt supplied by Scientific Polymer Products Inc.) solution in cyclohexanone |
| 4 | Rh-hexanoate dissolved in cyclohexanone (0.12%Rh) |
| 37.7 | Xylene |

The formulation above was gilded onto ceramic ware , fired at 840°C over 1hr. Bright gold films free of defects were produced.

## Claims

1. A liquid gold composition comprising a gold lustre and 0.05 to 50% by weight of an acrylate polymer of the formula:

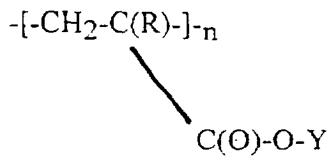

(I)

where
R = H or a C $_1$-$C_4$ alkyl group,
Y = a $C_5$ - $C_{40}$ hydrocarbyl group, which is monocyclic, bicyclic or tricyclic, which may be further carry ring substituents, and
n = an integer representing the number of repeat units in the polymer.

**2.** A composition according to Claim 1 wherein the gold lustre is a hydrocarbyl mercaptide of gold and is of the formulae:
Au-S-$CH_2R^1$, wherein $R^1$ = alkyl Au-S-CH($R^2$)$R^3$, wherein each of R $^2$ and $R^3$ = the same or different alkyl or aryl group (secondary thiols)
Au-S-$CR^4R^5$ $R^6$, wherein each of $R^4$, $R^5$ and $R^6$ = the same or different alkyl or aryl group (tertiary thiols)
Au-S-$R^7$ wherein $R^7$ = aryl group or a substituted aryl group (aromatic thiols).
AuSCHR$CO_2$R where R= H, alkyl or aryl and R'=H, alkyl or aryl

**3.** A composition according to Claim 2 wherein the hydrocarbyl group in the gold mercaptides are selected from alkyl, cycloalkyl, aryl and aralkyl groups, and the halo-, amino-, and carboxylic acid- substituted derivatives thereof.

**4.** A composition according to Claim 2 or 3 wherein the hydrocarbyl groups in the mercaptide is selected from methyl, ethyl, isopropyl, butyl, sec.-butyl, isobutyl, tert-butyl, heptyl, octyl, isooctyl, 2-ethyl hexyl, di-isobutylmethyl, nonyl, tert-nonyl, decyl, tert-decyl, undecyl, tert-undecyl, dodecyl, tert-dodecyl, tridecyl and octadecyl, cyclobutyl, cyclopentyl, cyclohexyl, dicyclohexylmethyl, phenyl, naphthyl, phenanthryl, benzyl, methylphenyl, 2-phenyl ethyl, 4-phenyl butyl, p-tert.-butylphenyl, o-methyl-p-tert.-butylphenyl, pinanyl, mixed methylphenyl, mixed dimethylphenyl, mixed dibenzylmethyl, p-chlorophenyl, pentachlorophenyl, o-carboxy-phenyl and o-aminophenyl groups.

**5.** A composition according to Claim 1 wherein the gold lustre is a gold sulpho-resinate.

**6.** A composition according to Claim 1 or 5 wherein the gold lustre is a gold sulpho-resinate obtained from a gold (III) salt and a sulphurised terpene, the terpene component of which may be naturally occuring

**7.** A composition according to any one of the preceding Claims wherein the cyclic hydrocarbyl group Y is a terpenyl group.

**8.** A composition according to any one of the preceding Claims wherein the terpenyl group is derivable from a terpene which is a natural, non-aromatic constituent of an essential oil, containing carbon, hydrogen and optionally oxygen, and/or a synthetic compound which is very closely related to the natural terpenes.

**9.** A composition according to Claim 7 wherein the terpenyl group is derived from a terpene is selected from monoterpenes (10 carbons - two isoprene units), sesquiterpenes (15 carbons), diterpenes (20 carbons), triterpenes (30 carbons) and tetraterpenes (40 carbons).

**10.** A composition according to Claim 9 wherein the terpenyl group is derived from a bicyclic monoterpene (10 carbons).

**11.** A composition according to Claim 10 wherein the terpenyl group is a bicyclic monoterpenyl group selected from bornyl, isobornyl, thujyl, fenchyl, pinocamphyl and isopinocamphyl groups.

**12.** A composition according to any one of the preceding Claims wherein the polymers of formula (I) have an average molecular weight in the range from 2,000 to 600,000.

**13.** A composition according to any one of the preceding Claims wherein the polymer of formula (I) is poly(isobornyl methacrylate).

**14.** A composition according to Claim 13 wherein the polymer has an average molecular weight in the range from 500,000-600,000.

**15.** A composition according to claim 13 wherein the polymer has an average molecular weight of approximately 100,000.

**16.** A composition according to any one of the preceding Claims wherein said composition contains in addition a solvent capable of forming a substantially homogeneous mixture with the gold lustre and the polymer so as to form a liquid or a smooth paste.

**17.** A composition according to Claim 16 wherein the solvent is selected from ketones, aliphatic hydrocarbons, aromatic hydrocarbons, alkyl acetates, glycol ethers, terpenes, natural oils and waxes.

**18.** A composition according to any one of the preceding Claims wherein said composition contains in addition a gold flux.

**19.** A composition according to Claim 18 wherein the gold flux is selected from salts or resinates of antimony, bismuth, boron, cadmium, cerium, chromium, cobalt, copper, iridium, lead, rhodium, silicon, silver, tin, titanium, vanadium and zirconium.

**20.** A composition according to Claim 18 or 19 wherein the amount of flux added to the compositions is in the range from about 0.01 to 10 % by weight of the total composition.

**21.** A method of decorating a substrate surface said method comprising applying a composition comprising a gold lustre and 0.05 to 50 % by weight of an acrylate polymer of the formula:

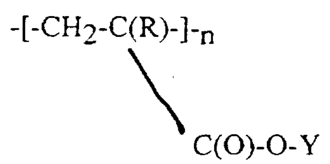

(I)

where
R = H or a C $_1$-C$_4$ alkyl group,
Y = a C$_5$ - C$_{40}$ hydrocarbyl group, which is monocyclic, bicyclic or tricyclic, which may be further carry ring substituents, and
n = an integer representing the number of repeat units in the polymer in a solvent, and heat-treating the resultant decorated substrate to cure the decoration on the substrate surface.

**22.** A method according to Claim 21 wherein the composition is applied on the substrate surface by one or more methods selected from brush coating, spraying, stippling, stenciling, decalomania, direct and offset printing, indirect screen-printing, direct hot- or cold-printing and ink-jet printing techniques.

**23.** A method according to Claim 21 or 22 wherein the substrate on which the composition is applied is selected from the group consisting of glass, earthenware, bone china, porcelain, silicate materials, metals, quartz, carbon, mica, plastics, laminates, wood, paper, textiles and leather.

**24.** A method according to any one of the preceding Claims 21-23 wherein the composition applied to the substrate surface is as claimed in any one of the preceding Claims 2-20.

**Patentansprüche**

**1.** Flüssige Goldzusammensetzung, die einen Goldglanz und 0,05 bis 50 Gew.-% eines Acrylatpolymers der folgenden Formel umfasst:

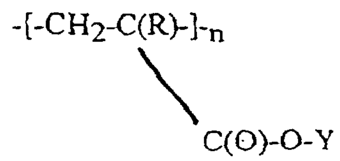

(I)

worin
R für H oder eine $C_1$-$C_4$ Alkylgruppe steht,
Y für eine $C_5$-$C_{40}$ Kohlenwasserstoffgruppe steht, die monocyclisch, bicyclisch oder tricyclisch ist und die des weiteren Ringsubstituenten tragen kann und
n für eine ganze Zahl steht, die die Zahl der Wiederholungseinheiten in dem Polymer angibt.

**2.** Zusammensetzung nach Anspruch 1, wobei der Goldglanz ein Kohlenwasserstoffmercaptid von Gold ist und die folgende Formel besitzt:

Au-S-$CH_2R^1$, worin $R^1$ für Alkyl steht,
Au-S-CH($R^2$)$R^3$, worin jeder der Reste $R^2$ und $R^3$ für gleiche oder verschiedene Alkyl- oder Arylgruppen steht (sekundäre Thiole),
Au-S-$CR^4R^5R^6$, worin jeder der Reste $R^4$, $R^5$ und $R^6$ für gleiche oder verschiedene Alkyl- oder Arylgruppen steht (tertiäre Thiole),
Au-S-$R^7$, worin $R^7$ für eine Arylgruppe oder eine substituierte Arylgruppe steht (aromatische Thiole), und
Au-SCHR-$CO_2$R', worin R für H, Alkyl oder Aryl steht und R' für H, Alkyl oder Aryl steht.

**3.** Zusammensetzung nach Anspruch 2, worin die Kohlenwasserstoffgruppe in den Goldmercaptiden aus Alkyl-, Cycloalkyl-, Aryl- und Aralkylgruppen und den Halogen-, Amino- und Carbonsäure-subsituierten Derivaten hiervon ausgewählt sind.

**4.** Zusammensetzung nach Anspruch 2 oder 3, worin die Kohlenwasserstoffgruppen in dem Mercaptid aus Methyl-, Ethyl-, Isopropyl-, Butyl-, sec.-Butyl-, Isobutyl-, tert..-Butyl-, Heptyl-, Octyl-, Isooctyl-, 2-Ethylhexyl-, Diisobutylmethyl-, Nonyl-, tert.-Nonyl-, Decyl-, tert.-Decyl-, Undecyl-, tert.-Undecyl-, Dodecyl-, tert.-Dodecyl-, Tridecyl- und Octadecyl-, Cyclobutyl-, Cyclopentyl-, Cyclohexyl-, Dicyclohexylmethyl-, Phenyl-, Naphthyl-, Phenanthryl-, Benzyl-, Methylphenyl-, 2-Phenylethyl-, 4-Phenylbutyl-, p-tert.-Butylphenyl-, o-Methyl-p-tert.butylphenyl-, Pinanyl-, gemischten Methylphenyl-, gemischten Dimethylphenyl-, gemischten Dibenzylmethyl-, p-Chlorphenyl-, Pentachlorphenyl-, o-Carboxyphenyl- und o-Aminophenylgruppen ausgewählt sind.

**5.** Zusammensetzung nach Anspruch 1, worin der Goldglanz ein Goldsulforesinat ist.

**6.** Zusammensetzung nach Anspruch 1 oder 5, worin der Goldglanz ein Goldsulforesinat ist, das aus einem Gold (III)-salz und einem geschwefelten Terpen, dessen Terpenkomponente natürlich vorkommen kann, erhalten wurde.

**7.** Zusammensetzung nach einem der vorhergehenden Ansprüche, wobei die cyclische Kohlenwasserstoffgruppe Y eine Terpenylgruppe ist.

**8.** Zusammensetzung nach einem der vorhergehenden Ansprüche, wobei die Terpenylgruppe aus einem Terpen erhältlich ist, das ein natürlicher, nicht aromatischer Bestandteil eines ätherischen Öls, das Kohlenstoff, Wasserstoff und gegebenenfalls Sauerstoff enthält, und/oder eine synthetische Verbindung, die mit den natürlichen Terpenen nahe verwandt ist, ist.

**9.** Zusammensetzung nach Anspruch 7, wobei die Terpenylgruppe von einem Terpen abgeleitet ist, das aus Monoterpenen (10 Kohlenstoffatome, 2 Isopreneinheiten), Sesquiterpenen (15 Kohlenstoffatome), Diterpenen (20 Kohlenstoffatome), Triterpenen (30 Kohlenstoffatome) und Tetraterpenen (40 Kohlenstoffatome) ausgewählt ist.

**10.** Zusammensetzung nach Anspruch 9, wobei die Terpenylgruppe von einem bicyclischen Monoterpen (10 Kohlenstoffatome) abgeleitet ist.

**11.** Zusammensetzung nach Anspruch 10, wobei die Terpenylgruppe eine bicyclische Monoterpenylgruppe ist, die aus Bomyl-, Isobornyl-, Thujyl-, Fenchyl-, Pinocamphyl- und Isopinocamphylgruppen ausgewählt ist.

**12.** Zusammensetzung nach einem der vorhergehenden Ansprüche, wobei die Polymere der Formel (I) ein mittleres Molekulargewicht im Bereich von 2.000 bis 600.000 aufweisen.

**13.** Zusammensetzung nach einem der vorhergehenden Ansprüche, wobei das Polymer der Formel (I) Poly(isobornylmethacrylat) ist.

**14.** Zusammensetzung nach Anspruch 13, wobei das Polymer ein mittleres Molekulargewicht im Bereich von 500.000 bis 600.000 aufweist.

**15.** Zusammensetzung nach Anspruch 13, wobei das Polymer ein mittleres Molekulargewicht von etwa 100.000 aufweist.

**16.** Zusammensetzung nach einem der vorhergehenden Ansprüche, wobei die Zusammensetzung darüber hinaus ein Lösemittel mit der Fähigkeit zur Bildung eines im wesentlichen homogenen Gemisches mit dem Goldglanz und dem Polymer, um eine Flüssigkeit oder eine geschmeidige Paste zu bilden, enthält.

**17.** Zusammensetzung nach Anspruch 16, wobei das Lösemittel aus Ketonen, aliphatischen Kohlenwasserstoffen, aromatischen Kohlenwasserstoffen, Alkylacetaten, Glycolethern, Terpenen, natürlichen Ölen und Wachsen ausgewählt ist.

**18.** Zusammensetzung nach einem der vorhergehenden Ansprüche, wobei die Zusammensetzung darüber hinaus ein Goldflussmittel enthält.

**19.** Zusammensetzung nach Anspruch 18, wobei das Goldflussmittel aus Salzen oder Resinaten von Antimon, Wismut, Bor, Cadmium, Cer, Chrom, Kobalt, Kupfer, Iridium, Blei, Rhodium, Silicium, Silber, Zinn, Titan, Vanadium und Zirconium ausgewählt ist.

**20.** Zusammensetzung nach Anspruch 18 oder 19, wobei die Menge des den Zusammensetzungen zugegebenen Flussmittels in einem Bereich von etwa 0,01 bis 10 Gew.-% der Gesamtzusammensetzung liegt.

**21.** Verfahren zum Verzieren einer Substratoberfläche, wobei das Verfahren ein Applizieren einer Zusammensetzung, die einen Goldglanz und 0,05 bis 50 Gew.-% eines Acrylatpolymers der folgenden Formel umfasst:

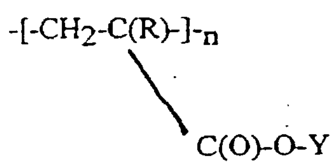

(I)

worin
R für H oder eine $C_1$-$C_4$ Alkylgruppe steht,
Y für eine $C_5$-$C_{40}$ Kohlenwasserstoffgruppe steht, die monocyclisch, bicyclisch oder tricyclisch ist und die des weiteren Ringsubstituenten tragen kann und
n für eine ganze Zahl steht, die die Zahl der Wiederholungseinheiten in dem Polymer angibt,
und ein Wärmebehandeln des erhaltenen verzierten Substrats zur Härtung der Verzierung auf der Substratoberfläche umfasst.

**22.** Verfahren nach Anspruch 21, wobei die Zusammensetzung auf die Substratoberfläche nach einem oder mehreren Verfahren appliziert wird, die aus Bürstenbeschichten, Sprühen, Stupfen, Schablonendruck, Decalomanie, direktem Drucken und Offset-Drucken, indirektem Siebdrucken, direktem Heiß- oder Kaltbedrucken und Tintenstrahldrucktechniken ausgewählt sind.

**23.** Verfahren nach Anspruch 21 oder 22, wobei das Substrat, auf das die Zusammensetzung appliziert wird, aus der Gruppe ausgewählt ist, die aus Glas, Steinware, Knochenporzellan, Porzellan, Silicatmaterialien, Metallen, Quarz, Kohlenstoff, Glimmer, Kunststoff, Laminaten, Holz, Papier, Textilien und Leder besteht.

**24.** Verfahren nach einem der vorhergehenden Ansprüche 21 bis 23, wobei die auf die Substratoberfläche applizierte Zusammensetzung eine ist, die in einem der vorhergehenden Ansprüche 2 bis 20 beansprucht wird.

## Revendications

**1.** Composition d'or liquide comprenant un rehausseur d'éclat doré et 0,05 à 50% en poids d'un polymère acrylate de formule :

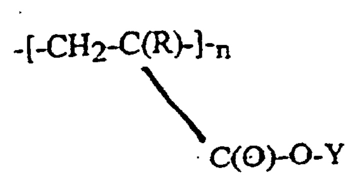

(I)

dans laquelle
R = H ou un groupe alkyle en $C_1$-$C_4$,
Y = un groupe hydrocarbyle en $C_5$-$C_{40}$, qui est monocyclique, bicyclique ou tricyclique, qui éventuellement comporte en outre des substituants cycliques et
n = un nombre entier représentant le nombre de motifs répétés dans le polymère.

**2.** Composition selon la revendication 1, dans laquelle le rehausseur d'éclat doré est un mercaptide d'hydrocarbyle d'or et est de la formule :

Au-S-$CH_2R^1$, dans laquelle $R^1$ est un groupe alkyle
Au-S-$CH(R^2)R^3$, dans laquelle chacun des groupes $R^2$ et $R^3$ sont identiques ou différents l'un de l'autre et sont un groupe alkyle ou un groupe aryle (thiols secondaires)
Au-S-$CR^4R^5R^6$, dans laquelle chacun des groupes $R^4$, $R^5$ et $R^6$ sont identiques ou différents les uns des autres et sont un groupe alkyle ou un groupe aryle (thiols tertiaires)
Au-S-$R^7$ dans laquelle $R^7$ est un groupe aryle ou un groupe aryle substitué (thiols aromatiques)
$AuSCHRCO_2R$ où R = H, un alkyle ou aryle et R' = H, un alkyle ou aryle.

**3.** Composition selon la revendication 2, dans laquelle les groupes hydrocarbyles dans les mercaptides d'or sont choisis parmi les groupes alkyle, cycloalkyle, aryle et aralkyle, et leurs dérivés substitués halogénés, aminés et acide carboxyliques.

**4.** Composition selon la revendication 2 ou 3, dans laquelle les groupes hydrocarbyles dans le mercaptide sont choisis parmi les groupes méthyle, éthyle, isopropyle, butyle, sec-butyle, isobutyle, tert-butyle, heptyle, octyle, isooctyle, 2-éthyl hexyle, di-isobutylméthyle, nonyle, tert-nonyle, décyle, tert-décyle, undécyle, tert-undécyle, dodécyle, tert-dodécyle, tridécyle et octadécyle, cyclobutyle, cyclopentyle, cyclohexyle, dicyclohexylméthyle, phényle, naphthyle, phénanthryle, benzyle, méthylphényle, 2-phényléthyle, 4-phényl-butyle, p-tert-butylphényle, o-méthyl-p-tert-butylphényle, pinanyle, méthylphényle mélangé, diméthylphényle mélangé, dibenzylméthyle mélangé, p-chlorophényle, pentachlorophényle, o-carboxy-phényle et o-aminophényle.

**5.** Composition selon la revendication 1, dans laquelle le rehausseur d'éclat doré est un sulpho-résinate d'or.

**6.** Composition selon la revendication 1 ou 5, dans laquelle le rehausseur d'éclat doré est un sulpho-résinate d'or obtenu à partir de sel d'or (III) et d'un terpène sulfurisé, le composant terpène de ce dernier pouvant survenir naturellement.

**7.** Composition selon l'une quelconque des revendications précédentes dans laquelle le groupe hydrocarbyle cyclique Y est un groupe terpényle.

**8.** Composition selon l'une quelconque des revendications précédentes, dans laquelle le groupe terpényle dérive d'un terpène qui est un constituant naturel, non aromatique d'une huile essentielle, contenant un composé de

carbone, de l'hydrogène et éventuellement de l'oxygène, et/ou un composé synthétique qui est très proche des terpènes naturels.

**9.** Composition selon la revendication 7, dans laquelle le groupe terpényle est dérivé de monoterpènes (10 atomes de carbone - deux unités d'isoprène), sesquiterpènes (15 atomes de carbone), diterpènes (20 unités de carbone), triterpènes (30 unités de carbone), et tétraterpènes (40 unités de carbone).

**10.** Composition selon la revendication 9, dans laquelle le groupe terpényle est dérivé d'un monoterpène bicyclique (10 unités de carbone).

**11.** Composition selon la revendication 10, dans laquelle le groupe terpényle est un groupe monoterpényle bicyclique choisi à partir de groupes bornyle, isobornyle, thujyle, fenchyle, pinocamphyle et isopinocamphyle.

**12.** Composition selon l'une quelconque des revendications précédentes, dans laquelle les polymères de la formule (I) ont une masse moléculaire moyenne de 2000 à 600 000.

**13.** Composition selon l'une quelconque des revendications précédentes, dans laquelle le polymère de la formule (I) est un méthacrylate de (poly)isobornyle.

**14.** Composition selon la revendication 13, dans laquelle le polymère a une masse moléculaire moyenne de 500 000 à 600 000.

**15.** Composition selon la revendication 13, dans laquelle le polymère a une masse moléculaire moyenne d'environ 100 000.

**16.** Composition selon l'une quelconque des revendications précédentes, dans laquelle ladite composition contient en plus un solvant capable de former un mélange substantiellement homogène avec le rehausseur d'éclat doré et le polymère de façon à former un liquide ou une pâte lisse.

**17.** Composition selon la revendication 16, dans laquelle le solvant est choisi à partir de cétones, d'hydrocarbures aliphatiques, d'hydrocarbures aromatiques, d'acétates d'alkyle, d'éthers de glycol, de terpènes, d'huiles naturelles et de cires.

**18.** Composition selon l'une quelconque des revendications précédentes, dans laquelle ladite composition contient en plus un flux d'or.

**19.** Composition selon la revendication 18, dans laquelle le flux d'or est choisi à partir de sels ou résinates d'antimoine, de bismuth, de bore, de cadmium, de cérium, de chrome, de cobalt, de cuivre, d'iridium, de plomb, de rhodium, de s'ilicium, d'argent, d'étain, de titane, de vanadium et de zirconium.

**20.** Composition selon la revendication 18 ou 19, dans laquelle la quantité de flux ajoutée aux compositions est d'environ 0,01 à 10% en poids de la composition totale.

**21.** Procédé de décoration d'une surface de substrat, ledit procédé comprenant l'application d'une composition comprenant un réhausseur d'éclat doré et 0,05 à 50% en poids d'un polymère acrylate de la formule :

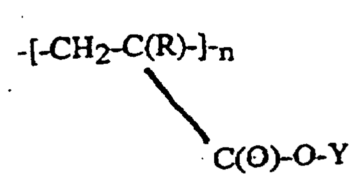

(I)

dans laquelle
R = H ou un groupe alkyle en $C_1$-$C_4$

Y = un groupe hydrocarbyle en $C_5$-$C_{40}$ qui est monocyclique, bicyclique ou tricyclique, qui peut en outre substituer des supports en anneau et
n = un nombre entier représentant le nombre d'unités de répétition dans le polymère dans un solvant, et le traitement thermique du substrat décoré obtenu pour cuire la décoration sur la surface du substrat.

**22.** Procédé selon la revendication 21, dans lequel la composition est appliquée sur la surface de substrat par un ou plusieurs procédés, choisis parmi le couchage à la brosse, la vaporisation, le pointillage, le marquage au pochoir, la décalcomanie, l'impression directe et offset, la sérigraphie indirecte, l'impression directe à chaud ou à froid et des techniques d'impression à jet d'encre.

**23.** Procédé selon la revendication 21, ou 22, dans lequel le substrat sur lequel la composition est appliquée est choisi à partir du groupe composé de verre, de faïence, de porcelaine tendre anglaise, de porcelaine, de matériaux de silicate, de métaux, de quartz, de carbone, de mica, de plastiques, de laminés, de bois, de papier, de textiles et de cuir.

**24.** Procédé selon l'une quelconque des revendications précédentes 21-23, dans lequel la composition appliquée à la surface de substrat est comme revendiqué dans n'importe laquelle des revendications précédentes 2-20.